(19) **Europäisches Patentamt / European Patent Office / Office européen des brevets**

(11) **EP 1 936 994 A2**

(12) **EUROPEAN PATENT APPLICATION**

(43) Date of publication:
**25.06.2008 Bulletin 2008/26**

(51) Int Cl.:
*H04N 7/26* (2006.01)  *H04N 7/50* (2006.01)
*H04N 7/36* (2006.01)

(21) Application number: **07254803.5**

(22) Date of filing: **12.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **21.12.2006 GB 0625611**

(71) Applicant: **Tandberg Television ASA**
**0607 Oslo (NO)**

(72) Inventor: **Wu, Ping**
**Southampton SO16 3PU (GB)**

(74) Representative: **Want, Clifford James**
**Harrison Goddard Foote**
**40-43 Chancery Lane**
**London WC2A 1JA (GB)**

(54) **Weighted prediction video encoding**

(57)   A method of encoding a source picture using at least two reference pictures by dividing the source picture into regions based on a predetermined criterion and dividing the reference pictures into corresponding regions using the predetermined criterion. At least luminance values for the source picture are obtained by weighting and offsetting luminance values of at least one of the regions of at least one of the reference pictures by an average luminance difference between the region of the reference picture and the corresponding region of the source picture. The weighted and offset luminance values from the at least two reference pictures are averaged or summed to predict luminance values of the source picture.

```
┌─────────────────────────────────────┐
│                                  61  │
│ Divide source picture into regions   │
│ using a predetermined criterion      │
└─────────────────────────────────────┘
                  │
┌─────────────────────────────────────┐
│                                  62  │
│ Divide at least two reference        │
│ pictures into regions using the      │
│ predetermined criterion              │
└─────────────────────────────────────┘
                  │
┌─────────────────────────────────────┐
│                                  63  │
│ Weight and offset luminance values   │
│ of at least one region of at least   │
│ one of the reference pictures and    │
│ the corresponding region of the      │
│ source picture by comparing average  │
│ luminance of the corresponding       │
│ regions                              │
└─────────────────────────────────────┘
                  │
┌─────────────────────────────────────┐
│                                  64  │
│ Determine luminance values for the   │
│ source picture by averaging or       │
│ summing the luminance values from    │
│ the at least two reference pictures, │
│ weight and offset as appropriate     │
└─────────────────────────────────────┘
```

Figure 6

EP 1 936 994 A2

**Description**

This invention relates to weighted prediction video encoding.

Known advanced image coding systems employing complex video compression techniques have been standardised and commercially available for a number of years. Most popular of these are a family of MPEG standards and its successors. A major feature of these coding processes is motion compensation which is used to exploit temporal redundancy in moving image sequences.

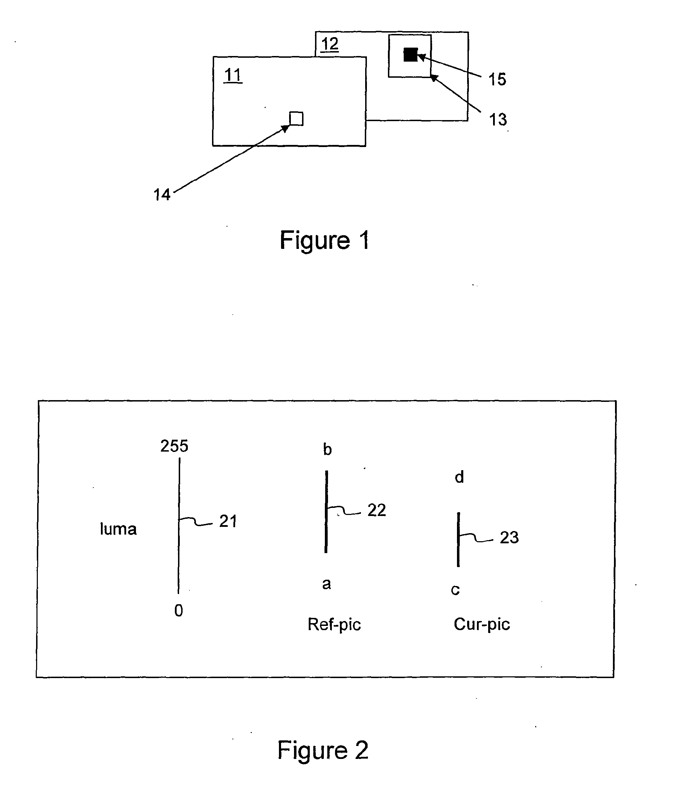

In these coding processes an image frame or picture is divided into an array of irreducible pixels called picture elements or pels. Referring to Figure 1, pixels of a current picture 11 are coded by reference to pixels in one or more other pictures 12 that sequentially precede or follow or a plurality of pictures one or more of which precede, and one or more of which follow, the current picture; thus, prediction and interpolation are used to find reference material to compare with the current picture content and the differences between the pixels are calculated.

Typically the processing is performed on small rectangular blocks of pixels called Macro-Blocks (MB) whose size in most current systems is 16 x 16 pixels but may be a different size. To account for movement between successive pictures a Motion Vector (MV) is derived for each MB. Referring to Figure 1, a search area 13 is defined in the reference pictures 12 where a match between values of the current MB pixels 14 may be found that gives the shift between current pixels being coded and those reference pixels 15 in adjacent pictures that are most similar to pixels being coded but shifted spatially. At a decoder these successive pictures are reconstructed and stored so that they are available at a time at which the current picture and its pixels are being processed and so can be indicated by the current MV.

In a known H264/AVC video compression standard this process is enhanced compared to the MPEG2 standard in a number of ways that enable better performance. In particular, a process of retrieving the reference pixels 15 from memory and combining them with the current pixel data has an offset and weighting stage that modifies the retrieved data prior to this computation. This is a feature that is available for any purpose which a system designer assigns to the feature and is defined only in a syntax of a transmitted bit stream which a compliant decoder must be able to implement; the encoder derives information from the pictures being coded and sends this according to the relevant transmission syntax so that the decoder can find and make use of it. This leaves the encoder designer freedom to create innovative methods to exploit this weighting application.

A typical application in which this feature can be effective is in treatment of fades or where large or small regions of a picture are affected by rapid brightness changes such as when photographic flash guns operate in front of TV cameras or when there are many rapidly changing specular reflections from objects in a scene. A fade is the transition between a given picture sequence and another, for example black, i.e. no picture, in which the amplitude of the picture signal is steadily reduced, and vice versa. A cross fade is a similar transition between two successive picture sequences that are different in content. Fades are not well coded in un-weighted MPEG compression systems. Specifications of compression systems do not generally define such treatment explicitly, they simply provide a set of tools and the use of those tools in achieving high coding quality under constrained bit rate conditions is a matter for the ingenuity of an encoder designer.

**The Weighted Prediction Feature**

Motion Compensation (MC) is a known fundamental video coding feature. A widely used element of such a feature in many video standards is an array of pixels that comprise a Macroblock (MB). This array can be a fixed size and shape or can differ in size and shape depending upon the standard but typically it is a 16x16 pixel array of video data. In Figure 1 each MB 14 in a current picture 11 undergoing encoding can be predicted from an identically sized pixel array 15 from a nominated video reference picture 12 (or from a combination of a few smaller sized block video data arrays to form a 16x16 array). The weighted prediction provides that when a MC process is carried out, the values of the video data retrieved from the reference picture will be weighted and then shifted with an offset value to give modified prediction video data that will be used to encode the current pixels.

Reference pictures 12 for a current picture 11 undergoing encoding can come from forward and/or backward directions. Those queued from the forward direction will form a reference picture "list 0" and those from a backward direction will form a reference picture "list 1". In the H.264/AVC standard such a reference list can be freely reordered to meet an encoding need. The reordering process can be triggered at each slice of the processing stage. A slice is a defined element of the standard and comprises the pixels contained in a sub-region of a complete picture. A complete video picture can be formed by one single slice or a number of smaller video slices.

| ref_pic_list_reordering( ) { | C | Descriptor |
|---|---|---|
| if( slice_type != I && slice_type != SI ) { | | |
| ref_pic_list_reordering_flag_l0 | 2 | u(1) |
| if( ref_pic_list_reordering_flag_l0 ) | | |
| do { | | |
| reordering_of_pic_nums_idc | 2 | ue(v) |
| if( reordering_of_pic_nums_idc = = 0 \| \| reordering_of_pic_nums_idc = = 1 ) | | |
| abs_diff_pic_num_minus1 | 2 | ue(v) |
| else if( reordering_of_pic_nums_idc = = 2 ) | | |
| long_term_pic_num | 2 | ue(v) |
| } while( reordering_of_pic_nums_idc != 3 ) | | |
| } | | |
| if( slice_type = = B ) { | | |
| ref_pic_list_reordering_flag_l1 | 2 | u(1) |
| if( ref_pic_list_reordering_flag_l1 ) | | |
| do { | | |
| reordering_of_pic_nums_idc | 2 | ue(v) |
| if( reordering_of_pic_nums_idc = = 0 \| \| reordering_of_pic_nums_idc = = 1 ) | | |
| abs_diff_pic_num_minus1 | 2 | ue(v) |
| else if( reordering_of_pic_nums_idc = = 2 ) | | |
| long_term_pic_num | 2 | ue(v) |
| } while( reordering_of_pic_nums_idc != 3 ) | | |
| } | | |
| } | | |

**Table 1: Extract from H264 slice header syntax**

Part of a reference syntax in tabular form as defined in the H264 standard is given as **Table 1**. The two parameters "ref_pic_list_reordering_flag_10" and "ref_pic_list_reordering_flag_I1" in this list may each be set to either 0 or 1 in order to turn on or off the reordering function that allows the decoder to be directed to specific reference pictures. The first of these directs the decoding of P pictures and the second the decoding of B pictures. Earlier in the syntax for the slice header is information that defines a current picture type through the parameter "slice_type". If the first ref_pic_list_reordering_flag_parameter is set to 0 then there is no reordering and by default the decoder will operate the simplest decode only from the single reference picture given by the first immediately previous picture. In order for this invention to function the value of this parameter must be set to 1 which allows multiple reference pictures. These several specific reference pictures are indicated at MB level and so are carried by a parameter - "ref_idx" - in each MB header. Similarly for B pictures the parameter ref_pic_reordering_flag_I1 must be set to 1 to enable multiple reference pictures. The remaining dependent parameters ensure that the decoder is correctly set up to decode as required. Thus a combination of parameters carried at different levels in the syntax ensures that the decoder is set up so that it may be directed appropriately to enable the invention to be applied.

The syntax for the weighting parameters obtained at a decoder are similarly given as Table 2 which is also part of the slice header syntax under the parameter "pred_weight_table" which provides a flag to turn a weighting activity on or off and also, when turned on, the values of the weight and offset to be applied. There are separate provisions for the luminance and chrominance weights and offsets. The lower portion of the table applies to B pictures.

The weighting needs to be done to both luminance (luma) pixels and chrominance (chroma) pixels independently. As an example: when using luma and reference pictures from list type 0, the key parameters in a weighting application are:

luma_log2_weight_denom (noted herein below as logWD),

luma_weight_10[i] (noted below as $w_0$), and

luma_offset_10[i] (noted below as $o_0$).

The function-call "pred_weight_table()" in the decoder process will be triggered at a slice processing stage. Once the values of these three parameters are available, the relevant formula in the H.264/AVC specification can be invoked; the equation 8-270 given in the specification is as follows:

if( logWD >= 1

$\text{predPart}_c[x, y] = \text{Clip1}_c\{ ((\text{PredPartL0}_c[x, y] * w_0 + 2^{logWD-1}) >> logWD) + o_0\}$

   else

$\text{predPart}_c[x, y] = \text{Clipl}_c\{ \text{predPartL0}_c[x, y] * w_0 + o_0 \}$

where the symbol ">>" is an operator to right-shift-one-bit so that x»y effectively means that x is divided by 2 for y times.

| pred_weight_table( ) { | C | Descriptor |
|---|---|---|
| **luma_log2_weight_denom** | 2 | ue(v) |
| if( chroma_format_idc != 0 ) | | |
| **chroma_log2_weight_denom** | 2 | ue(v) |
| for( i = 0; i <= num_ref_idx_l0_active_minus1; i++ ) { | | |
| **luma_weight_l0_flag** | 2 | u(1) |
| if( luma_weight_l0_flag ) { | | |
| **luma_weight_l0[ i ]** | 2 | se(v) |
| **luma_offset_l0[ i ]** | 2 | se(v) |
| } | | |
| if ( chroma_format_idc != 0 ) { | | |
| **chroma_weight_l0_flag** | 2 | u(1) |
| if( chroma_weight_l0_flag ) | | |
| for( j =0; j < 2; j++ ) { | | |
| **chroma_weight_l0[ i ][ j ]** | 2 | se(v) |
| **chroma_offset_l0[ i ][ j ]** | 2 | se(v) |
| } | | |
| } | | |
| } | | |
| if( slice_type = = B ) | | |
| for( i = 0; i <= num_ref_idx_l1_active_minus1; i++ ) { | | |
| **luma_weight_l1_flag** | 2 | u(1) |
| if( luma_weight_l1_flag ) { | | |
| **luma_weight_l1[ i ]** | 2 | se(v) |
| **luma_offset_l1[ i ]** | 2 | se(v) |
| } | | |
| if( chroma_format_idc != 0 ) { | | |
| **Chroma_weight_l1_flag** | 2 | u(1) |
| if( chroma_weight_l1_flag ) | | |
| for( j = 0; j < 2; j++ ) { | | |
| **chroma_weight_l1[ i ][ j ]** | 2 | se(v) |
| **chroma_offset_l1[ i ][ j ]** | 2 | se(v) |
| } | | |
| } | | |
| } | | |
| } | | |

**Table 2: Extract from Slice Header syntax.**

The variables predPartL0$_C$ and predPart$_c$ are associated with the prediction process and Clip1$_c$ is a clip function which will ensure that the prediction luma value will be confined in the range [0,255]. Variables x and y are indices that locate a given pixel in a picture. The parameter "predPartL0$_C$" directs the decoder to reference pictures from the list 0 set and the use of a single list of pictures implies that this formula applies to a P picture.

Concepts of P-pictures and B-Pictures exist in the H.264/AVC standard as for the MPEG-2 standard. A "P-picture" is a "Predictive picture" and a "B-picture" is a "Bi-predictive or interpolative picture". In the MPEG-2 standard it is called Bi-directional (predictive) picture; in the H.264/AVC standard this meaning has been modified.

In short, a P-picture will provide a prediction from a single reference picture, but can be from any reference picture in a long reference picture list e.g. list 0, and a B-picture will make a combined prediction from two reference pictures, usually one from a forward and one from a backward direction in time. Therefore, the above H.264/AVC equation 8-270 can be evolved into the H.264/AVC equation 8-272:

$$\mathrm{predPart}_C[\, x, y\,]$$

$$=$$

$$\mathrm{Clip1}_C\{\, ((\,\mathrm{predPartL0}_C[\, x, y\,] * w_0 + \mathrm{predPartL1}_C[\, x, y\,] * w_1 + 2^{\log WD}\,) >> (\,\log WD + 1\,)) + ((\, o_0 + o_1 + 1\,) >> 1\,)\}$$

There is one prediction from reference list 0 and another one from reference list 1, and then the two may be combined, for example, averaged or added in a fixed operation, where all values for both pictures may typically be halved and the two components added together. The additional weighting and offset functions are applied within this combining process and are differently applied to each of the two contributing components before they are added and then the sum is divided by 2, via the >>1 term at the end of the equation.

It is an object of the present invention to provide ways in which this weighting feature can be used to improve picture coding quality especially where fades are in progress or where small areas of a picture differ significantly from others and need to apply more locally relevant coding parameters but there is only a global set of parameters available at the slice level of the system syntax. The MB level does not provide means to give this localised parameter changes and so the slice level needs to be adapted appropriately as described herein.

According to the invention there is provided a method of encoding a source picture using at least two reference pictures comprising the steps of: dividing the source picture into regions based on a predetermined criterion; dividing the at least two reference pictures into corresponding regions using the predetermined criterion; and determining at least luminance values for the source picture by weighting and offsetting luminance values of at least one of the regions of at least one of the reference pictures by an average luminance difference between the region of the reference picture and the corresponding region of the source picture and averaging or summing the weighted and offset luminance values from the at least two reference pictures.

Conveniently the method further comprises detecting a fade between a reference picture and a source picture in a pre-processing stage of a video compression system, and applying the method when a fade is detected.

Alternatively, the method further comprises detecting when a local area is different in content from its neighbours as a result of a light flash or short term specular reflection and applying the method when such a difference is detected.

Advantageously, the predetermined criterion is a psychovisual model to determine visible differences between the regions.

Conveniently, the psychovisual model is a measurement of luminance contrast in the region.

Alternatively, the psychovisual model is a measurement of texture in the region.

Optionally, the at least two reference pictures comprise a repeated reference picture.

Conveniently, at least one of the regions is not contiguous but comprises isolated portions of the region.

Preferably, the method further comprises determining chrominance values and averaging or summing weighted and offset chrominance values from the at least two reference pictures.

The invention will now be described, by way of example, with reference to the accompanying drawings in which:

Figure 1 is a schematic diagram of known motion vector derivation;

Figure 2 illustrates change in a luma range in a video luma value fade;

Figure 3 is a flowchart of a method of using weight and offset estimation to encode a fade, according to the invention;

Figure 4 is a schematic illustration of video coding using weights and offset according to the invention;

Figure 5 illustrates selection of a luma range in a video luma fade using weighting estimation according to the invention; and

Figure 6 is a flowchart of a method of determining luminance values according to the invention.

In the Figures, like reference numbers denote like parts.

In a fade a sequence of pictures gradually increases or decreases the luma and chroma amplitudes, usually to or from zero values, i.e. black. Figure 2 illustrates a simplified case where logWD = 0 and where only luma values are taken from a P-picture case, i.e. a previous picture in the sequence. In Figure 2 the line 21 represents a maximum range available to the luma signal in an 8 bit binary system. The line 22 is an actual range of the luma in a reference MB of the reference picture, specifically between integer values a and b (a, b$\in$[0, 255]). Line 23 illustrates an actual range of MB pixel values in a current picture, between c and d. Assuming that all the luma values are within the range [a,b] in the reference picture, and all the luma values are within [c,d] in the current picture, it is also assumed that there is a linear fading towards black of the luma value from the reference picture (Ref-pic) 22 to the current picture (Cur-pic) 23. In other words the values of a and c are tending towards 0 as are those of b and d.

Thus, the range of [a, b] is greater than the range [c, d] and a>c and b>d. Then the equations:

$$luma_c = luma_a * w_0 + o_0;$$

$$luma_d = luma_b * w_0 + o_0;$$

apply so that it can derived that:

$$w_0 = (luma_c - luma_d)/(luma_a - luma_b);$$

$$o_0 = (luma_a * luma_d - luma_b * luma_c)/(luma_a - luma_b).$$

In general, the weights and offsets estimation process is purely an encoder process. When the weights and offsets are generated properly, the decoder can perform weighted prediction according to the standard specification. Although weighted prediction applied to a video fade is described herein, weighted prediction can be used for other applications, for example in dealing with short term flashes and specular highlights that could otherwise degrade coding performance. The method allows variability of the weighting factors at MB level which is not usually possible other than at slice level.

Weighted prediction can be performed in a very complicated way which means that some weighted prediction methods might not be practical. In this disclosure innovative practical ways of producing the applicable weights and offsets are explained in order to take advantage of the weighted prediction feature in the H.264/AVC standard.

**The encoding method**

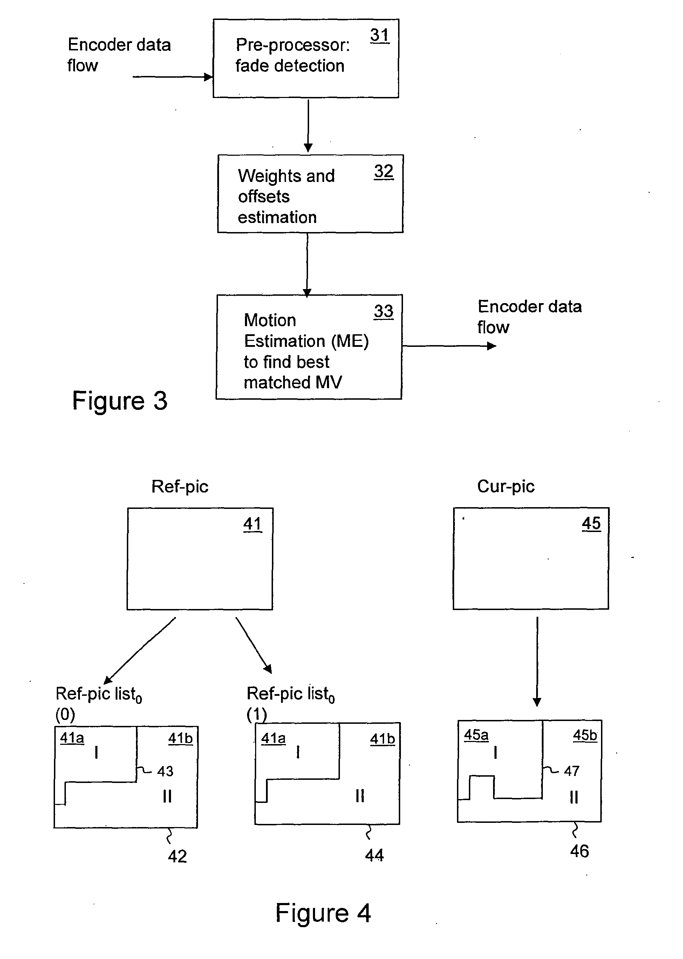

Figure 3 is a block diagram of the estimation 32 of the weights and offsets at an encoder performed, as required, at the encoder pre-processing stage. Such a pre-processing stage has knowledge of the behaviour of a picture sequence and can then make assessments about how to treat pictures of the sequence during a complete coding process and not just for these weights and offsets. Given that the current video coding standards all use defined structures comprised of pixel arrays then this pre-processing is also required to be able to apply this behavioural knowledge to sub-regions of each picture such as MBs, slices etc. Applicable psychovisual models may also be employed in this process to determine the visibility of certain features in the video material.

Thus, even when, for example, a video fade has been detected 31 by a video pre-processor, it is usual that the fade is not completely linear, and also that its characteristics can vary for different portions of consecutive video pictures. For the purposes of explaining how such a fade would be processed, it is convenient to consider a simplified case.

**Region adaptive weights and offsets estimation in a simple P-picture case**

Referring to Figure 4, without loss of generality, at least a single P-picture may be used as a reference picture 41 but re-arranged so as to appear twice in a list of reference pictures 42, 44, so that two or more different reference indices, referred to by parameter RefIdx, are allocated to instances of the reference picture, although they are all actually the same reference picture in content. By using a same reference picture 41 at least twice 42, 44, two or more different sets of weights and offsets may be applied to two or more different regions 41a, 41b in the reference picture 41. In principle, this process may be repeated for as large a number of different parameter sets as required.

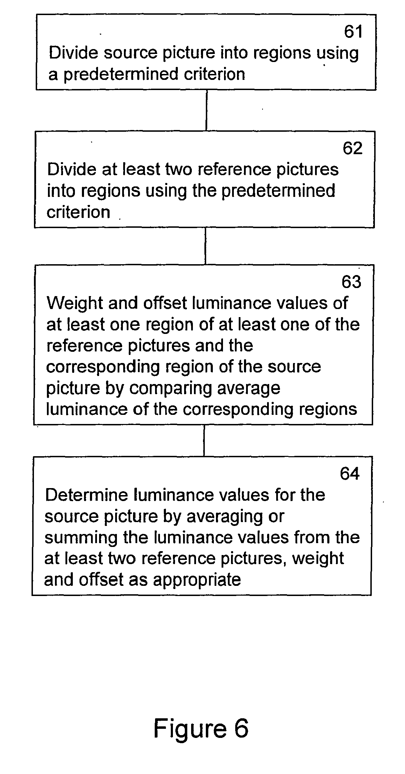

Furthermore, referring to Figure 6, by using information from the pre-processor about the image content to identify 61 and mark the regions 41 a, 41b of the picture that share similar characteristics, each region can be analysed in turn and the data sent to the decoder to assist the weights and offsets estimation. Psychovisual models may be applied to this analysis using, say, texture information about several regions 41a, 41b of the reference picture 41 as appropriate. Alternatively, for example, a localised contrast measure, such as that which forms a part of "Determining visually noticeable differences between two images" EP 0986264, can be applied to any given picture which can then be segmented into high and low activity regions. In general EP 0986264 describes a psychovisual modelling algorithm that uses localised contrast information at the pixel level to predict a human masking effect on any two given pictures, video frame pictures, for example. The visibility of the difference at every pixel location between the two pictures can be assessed.

A corresponding division also needs to be applied to the current picture 45. Division 62 into regions 45a, 45b will typically be done on a MB basis, i.e., a regional boundary 47 is only placed at a MB boundary. A total number, and location, of MBs marked as being in a first region 41a in the reference picture 41 may be different from a number and location of MBs marked in a first region 45a in the current picture 45. The intention is to estimate weights and offsets according to the regions, in this example, first and second regions, but there could be more.

After completing the marking process on the reference picture and on the current picture, video data (luma) in the first region 41a of the reference picture 41 is compared with video data (luma) in the first region 45a of the current picture 45 in an average fashion, for example as illustrated in Figure 4. The same process is applied to the second region 41 b, 45b video data. Thus, at the end of the process, one set of weights and offsets, which may be called set I, will have been generated 63 for the first region 41a, 45a. At the same time, a second set of weights and offsets, set II, will have been generated 63 that is very suitable for the second region 41b, 45b video data. Then an index - RefIdx - contained in the MB header of the current decoded picture 46 will indicate, which reference picture 42 is used to carry the "set I" data. Another RefIdx index value for another reference picture 44 carries "set II" data.

Thus for a current picture 46 being decoded its slice header will determine much of its decoding sequence, in particular the available reference pictures 42 or 44. In addition, the motion vector for that MB will point to specific pixel groups in those reference pictures to be used in decoding. This vector may point to either region I or region II of the reference pictures. The MB header will also carry the encoder's command which weights to use by selecting the RefIdx value, which has an effect of making weights specific to a MB. This means that a MB in region I of a current picture 46 does not have to use reference material from region I of the reference pictures 42 or 44; similarly for region II.

Thus when set I weights and offsets are in use, for the associated particular reference picture 42 these weights and offsets are applied to both its first and second regions I and II 41 a, 41 b. In a typical case, it would be expected that the region I specific weights and offsets will provide better prediction for region I 41 a related video data. But for any MB that is adjacent to the marked boundary 47 the most suitable weights and offsets can be from either region I or region II. The marked region, region I or region II, can comprise various isolated areas in a picture, as determined by local behaviour.

The above example is described only for luma but could equally well use chroma or a combination of luma and chroma; in this example the region-based luma values will be used for regional weights/offsets estimation. This will need the three marked pictures 42, 44, 46 shown in Figure 4. The output results of this process will be separated weights and offsets for region I 45a and region II 45b respectively. A similar process to that shown in Figure 4 will be conducted in the case of a fade and the regional weights will be switched accordingly.

Thus there is provided an intelligent method of estimating variable weights and offsets over a complete picture. The weighting values will be biased according to the video content. The related algorithm that enables the picture to be segmented can itself also be further developed and improved over time. With this example of using a two-region marking approach, an index of one reference picture can be selected to carry a set of weights and offsets, but it may be decided that the index of the other reference picture will carry no weighting at all, this is similar to a normal MPEG-2 video prediction process, i.e. there is no weighted prediction.

**Working with more than two reference pictures:**

So far the description has, for simplicity, covered the case in which only one reference picture 41 is used but making the reference picture appear in the reference list at least twice 42, 44. In theory, more than one reference picture can be used in such an operation. Furthermore the B-picture case can also be considered. In this scenario, it is necessary first to consider the list 0 reference pictures independently, which usually appear before the source picture, and then independently the list 1 reference picture, which usually appears after the source picture and finally the bi-predictive prediction process is carried out.

In the H.264/AVC standard, such a mechanism is triggered by the following parameters:

weighted_pred_flag (for a P-picture case) and

weighted_bipred_idc (for a B-picture case).

Both flags are carried in the syntax for the picture parameter set (pic_parameter_set) which is illustrated in Table 3 taken from the H.264/AVC standard.

```
pic_parameter_set_rbsp( ) {
    pic_parameter_set_id
    seq_parameter_set_id
    entropy_coding_mode_flag
    pic_order_present_flag
    num_slice_groups_minus1
    if( num_slice_groups_minus1 > 0 ) {
        slice_group_map_type
        if( slice_group_map_type = = 0 )
            for( iGroup = 0; iGroup <= num_slice_groups_minus1; iGroup++ )
                run_length_minus1[ iGroup ]
        else if( slice_group_map_type = = 2 )
            for( iGroup = 0; iGroup < num_slice_groups_minus1; iGroup++ ) {
                top_left[ iGroup ]
                bottom_right[ iGroup ]
            }
        else if( slice_group_map_type = = 3 ||
                 slice_group_map_type = = 4 ||
                 slice_group_map_type = = 5 ) {
            slice_group_change_direction_flag
            slice_group_change_rate_minus1
        } else if( slice_group_map_type = = 6 ) {
            pic_size_in_map_units_minus1
            for( i = 0; i <= pic_size_in_map_units_minus1; i++ )
                slice_group_id[ i ]
        }
    }
    num_ref_idx_l0_active_minus1
    num_ref_idx_l1_active_minus1
```

| |
|---|
| **weighted_pred_flag** |
| **weighted_bipred_idc** |
| **pic_init_qp_minus26** /* relative to 26 */ |
| **pic_init_qs_minus26** /* relative to 26 */ |
| **chroma_qp_index_offset** |
| **deblocking_filter_control_present_flag** |
| **constrained_intra_pred_flag** |
| **redundant_pic_cnt_present_flag** |
| if( more_rbsp_data( ) ) { |
|     **transform_8x8_mode_flag** |
|     **pic_scaling_matrix_present_flag** |
|     if( pic_scaling_matrix_present_flag ) |
|       for( i = 0; i < 6 + 2* transform_8x8_mode_flag; i++ ) { |
|         **pic_scaling_list_present_flag[ i ]** |
|         if( pic_scaling_list_present_flag[ i ] ) |
|           if( i < 6 ) |
|             scaling_list( ScalingList4x4[ i ], 16, UseDefaultScalingMatrix4x4Flag[ i ] ) |
|           else |
|             scaling_list( ScalingList8x8[ i – 6 ], 64, UseDefaultScalingMatrix8x8Flag[ i – 6 ] ) |
|       } |
|     **second_chroma_qp_index_offset** |
|   } |
| rbsp_trailing_bits( ) |
| } |

**Table 3**

The flags of weighted_pred_flag and weighted_bipred_idc can be seen included here.

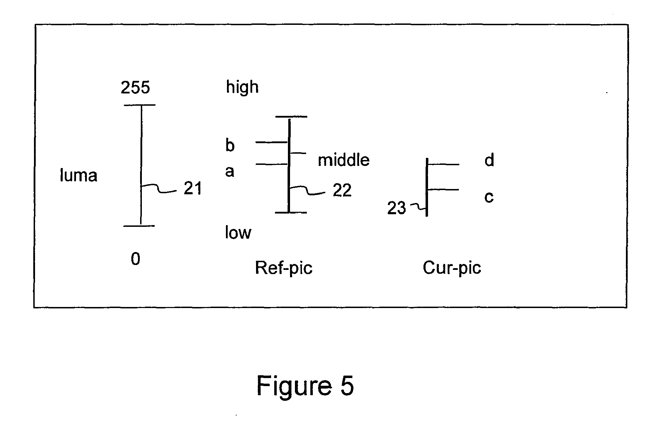

In Figure 5, the above method is modified since such a simple method is too sensitive. It will be understood that the weighted prediction only works well in a statistical sense, therefore it is important to obtain well-averaged weights and offsets in order to achieve improved coding efficiency. Rather than applying the luma values "low" and "high" from the range expression [low,high], a middle value is first found, e.g. an average or median, in the range [low,high] and this value labelled "middle". The luma values are divided into two zones: [low, middle] and [middle, high]. For these separated zones, through another average process, the luma value "a" and luma value "b", respectively representing above two different zones, are calculated.

A similar process will also apply to the current picture, so that the representative luma values "c" and "d" are calculated. Without changing the formulae given above revised weights and offsets associated with a region (I or II) can then be obtained and transmitted to the decoder. This process can be extended as required.

**Other considerations**

In practical encoder hardware, the motion estimation (ME) process is normally carried out only on video luma data. In practice therefore the motion vectors (MVs) from luma are also used in the chroma motion compensation process; there is no independent motion search for chroma video data. On many occasions a high activity texture could affect the accuracy of the weighting prediction more than in a low activity region, i.e. the low activity region is more likely to help capture a good average weighting prediction that is more stable. For this reason, for the available two RefIdx (0 and 1), where RefIdx=0 carries the set of weights and offsets obtained from the low activity region, this set of weights and offsets is transmitted to the decoder for both the luma and the chroma. At the same time, RefIdx=1 is treated differently, no weights and offsets are transmitted for chroma while RefIdx=1. This means that, when this reference picture index is chosen, no weighted prediction is actually applied to the chroma video data, just as in normal coding without a weighted prediction feature.

The weights and offsets estimated from the high activity region are also examined. If this set of weights and offsets are fairly close to that obtained from the low activity region, this set of weights and offsets are used for the luma video data when RefIdx=1, otherwise, no weighting parameter at all is transmitted for the luma video data, i.e., no weighted prediction will be performed for luma. Such a design helps to improve performance of the method in situations such as when the fade detection is wrong or the weighting parameter estimation is not accurate enough to allow any benefit in the video coding, then a basic approach is adopted by choosing no weighted prediction at all.

Thus this invention provides novel ways in which a weighting feature can be used to improve picture coding quality. One example of applying this feature is in dealing with fades, which are not coded well in MPEG2 systems.
Thus there is provided a means of conveying to a receiver several sets of weighting parameters appropriate to several areas of a picture being coded that may have different localised properties from one another. In known encoding schemes whole pictures are coded using only a single set of weighting parameters but this invention provides that the pictures may be segmented into regions such that regions which share properties in common will benefit from being given weighting parameter values that are appropriate to the behaviour of each region. Having segmented the image, several sets of weighting parameters may then transmitted for each whole picture by adapting the syntax of the video coding standard in use, for example MPEG.

**Claims**

1. A method of encoding a source picture using at least two reference pictures (12) comprising the steps of:

   a. dividing the source picture into regions based on a predetermined criterion;
   b. dividing the at least two reference pictures (12) into corresponding regions using the predetermined criterion; and
   c. weighting and offsetting luminance values of at least one of the regions of at least one of the reference pictures (12) by an average luminance difference between the region of the reference picture (12) and the corresponding region of the source picture; and
   d. determining at least luminance values for the source picture by averaging or summing the weighted and offset luminance values from the at least two reference pictures (12).

2. A method as claimed in claim 1, further comprising detecting a fade (31) between a reference picture (12) and a source picture in a pre-processing stage of a video compression system and applying the method when a fade is detected.

3. A method as claimed in claim 1, further comprising detecting when a local area is different in content from its neighbours as a result of a light flash or short term specular reflection and applying the method when such a difference is detected.

4. A method as claimed in any of the preceding claims, wherein the predetermined criterion is a psychovisual model to determine visible differences between the regions.

5. A method as claimed in claim 4, wherein the psychovisual model is a measurement of luminance contrast in the region.

6. A method as claimed in claim 4, wherein the psychovisual model is a measurement of texture in the region.

7. A method as claimed in any of the preceding claims, wherein the at least two reference pictures comprise a repeated reference picture (12).

8. A method as claimed in any of the preceding claims, wherein at least one of the regions is not contiguous but comprises isolated portions of the region.

9. A method as claimed in any of the preceding claims, further comprising determining chrominance values and averaging or summing weighted and offset chrominance values from the at least two reference pictures (12).

Figure 1

Figure 2

Encoder data flow → Pre-processor: fade detection $\underline{31}$

↓

Weights and offsets estimation $\underline{32}$

↓

Motion Estimation (ME) to find best matched MV $\underline{33}$ → Encoder data flow

## Figure 3

Ref-pic
$\underline{41}$

Cur-pic
$\underline{45}$

Ref-pic list$_0$ (0)

| $\underline{41a}$ I | $\underline{41b}$ |
| | ⌐ 43 |
| | II |

42

Ref-pic list$_0$ (1)

| $\underline{41a}$ I | $\underline{41b}$ |
| | |
| | II |

44

| $\underline{45a}$ I | $\underline{45b}$ |
| | ⌐ 47 |
| | II |

46

## Figure 4

Figure 5

```
┌─────────────────────────────────────────────┐
│                                          61   │
│ Divide source picture into regions using     │
│ a predetermined criterion                     │
└─────────────────────────────────────────────┘
                        │
┌─────────────────────────────────────────────┐
│                                          62   │
│ Divide at least two reference pictures        │
│ into regions using the predetermined          │
│ criterion                                     │
└─────────────────────────────────────────────┘
                        │
┌─────────────────────────────────────────────┐
│                                          63   │
│ Weight and offset luminance values of         │
│ at least one region of at least one of the    │
│ reference pictures and the                    │
│ corresponding region of the source           │
│ picture by comparing average                  │
│ luminance of the corresponding regions        │
└─────────────────────────────────────────────┘
                        │
┌─────────────────────────────────────────────┐
│                                          64   │
│ Determine luminance values for the            │
│ source picture by averaging or                │
│ summing the luminance values from the         │
│ at least two reference pictures, weight       │
│ and offset as appropriate                     │
└─────────────────────────────────────────────┘
```

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 0986264 A